# EUROPÄISCHE PATENTSCHRIFT

(11) **EP 2 975 309 B1**
(45) Veröffentlichungstag und Bekanntmachung des Hinweises auf die Patenterteilung: **14.06.2017**
(21) Anmeldenummer: 14177270.7
(22) Anmeldetag: 16.07.2014
(51) Int. Cl.: F16L 5/08

(54) **Pressdichtung mit Elastomerkörper**
Press seal with elastomer body
Joint de compression doté d'un corps élastomère

(43) Veröffentlichungstag der Anmeldung: 20.01.2016
(73) Patentinhaber: Hauff-Technik GmbH & Co. KG, 89568 Hermaringen (DE)
(72) Erfinder: Egritepe, Senol, 89520 Heidenheim (DE)
(74) Vertreter: König Szynka Tilmann von Renesse Patentanwälte Partnerschaft mbB

(56) Entgegenhaltungen:
- EP-A1- 1 930 639
- DE-C1- 19 651 659
- DE-U1-202011 102 671
- US-A- 5 340 123

## Beschreibung

Die vorliegende Erfindung betrifft eine Pressdichtung mit einem Elastomerkörper zur dichtenden Anlage an einer hindurchgeführten Leitung.

Pressdichtungen dieser Art weisen neben dem Elastomerkörper ferner eine Pressplatte und einen Spannbolzen auf. Durch Anziehen des Spannbolzens kann die Pressplatte auf den Elastomerkörper angedrückt werden, wodurch dieser in Richtung der Leitung komprimiert wird. Infolgedessen expandiert der Elastomerkörper senkrecht dazu bzw. legt sich dichtend an die hindurchgeführte Leitung und beispielsweise die Laibung einer Wandöffnung an.

Die US 5,340,123 A zeigt eine Gliederketten-Pressdichtung mit spritzgegossenen Presskörpern, die dreidimensional mit einer Verrippungsstruktur zur Verstärkung geformt sind. Gemäß einer Ausführungsform wirken die zum Verspannen der Pressdichtung vorgesehenen Spannbolzen jeweils mit einer in einen jeweiligen Presskörper eingelassenen Flanschmutter zusammen.

Auch die DE 196 51 659 C1 offenbart eine Pressdichtung mit spritzgegossenen Spannringen. Diese sind wiederum mit einer Verrippungsstruktur zur mechanischen Verstärkung vorgesehen.

Der vorliegenden Erfindung liegt die Aufgabe zugrunde, eine vorteilhafte Pressdichtung sowie ein vorteilhaftes Verfahren zu deren Herstellung anzugeben.

Erfindungsgemäß lösen diese Aufgabe eine Pressdichtung gemäß Anspruch 1, sowie ein Verfahren mit den Schritten
- Vorsehen der Pressplatte mit der Ausnehmung;
- Einsetzen der Mutter in die Ausnehmung;
- Anordnen von Elastomerkörper und Pressplatte in Anlage aneinander;
- und anschließend an diese Schritte, Einbringen des Spannbolzens, sodass dieser den Elastomerkörper durchsetzt, und Eindrehen des Spannbolzens in die Mutter.

Bevorzugte Ausgestaltungen ergeben sich aus den abhängigen Ansprüchen und der nachstehenden Beschreibung, wobei nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Ein Vorteil der Mutter mit Flanschabschnitt, in welche der Spannbolzen eingedreht ist bzw. wird, kann sich beispielsweise im Zuge der Herstellung einer entsprechenden Pressdichtung ergeben. So hat der Erfinder festgestellt, dass das Einbringen des Spannbolzens, also das Durchschieben durch eine Durchgangsöffnung im Elastomerkörper, vereinfacht sein kann, wenn es kombiniert mit einer Drehbewegung erfolgt. Der Spannbolzen wird dann also nicht nur entlang der Drehachse durch den Elastomerkörper geschoben, sondern zugleich auch um die Drehachse gedreht. Dies kann beispielsweise einem Verfangen des Gewindes an der Wandung der Durchgangsöffnung und damit etwa einer Beschädigung des Elastomerkörpers dort vorbeugen bzw. das Einschieben erleichtern. Insbesondere in einer Massenfertigung kann sich so beispielsweise auch der Durchsatz erhöhen lassen.

Ein alternativer Ansatz des Erfinders ging dahin, einen Spannbolzen mit integriertem Formschlusselement nach Art einer Schlossschraube vorzusehen (endseitig des Spannbolzens ist ein Mehrkant und ein demgegenüber nach außen hervortretender Flansch vorgesehen). Der Vorteil wäre, die beiden Funktionen "Formschluss" und "Gegenlager" in einem Bauteil integriert zu haben, was den Aufwand bei Lagerhaltung und Logistik verringern kann. Ein solcher Spannbolzen hätte beim Einbringen in den Elastomerkörper jedoch nur gedreht werden können, soweit das Formschlusselement noch nicht greift. Demgegenüber kann der Spannbolzen vorliegend über die gesamte Einschieb-/Durchschiebstrecke gedreht werden; mit der Drehbewegung kann der Spannbolzen dann auch in die Mutter eingedreht werden. Dies soll zunächst einen Vorteil illustrieren, die Allgemeinheit des Erfindungsgedankens aber nicht beschränken; eine entsprechende Herstellung ist jedoch bevorzugt.

Der Formschluss hält den proximalen Abschnitt der Mutter und damit die gesamte Mutter "verdrehsicher", blockiert also eine Drehbewegung der Mutter um die Drehachse. Die "Drehachse" legt ein Bezugssystem fest und ergibt sich als die Achse, um welche der Gewindeabschnitt beim Eindrehen rotiert, also beispielsweise als Achse der Rotationssymmetrie des Zylinders, in dessen Mantelfläche die Rillen des Gewindes (des Gewindeabschnitts) eingebracht sind.

Der Flansch überragt die Ausnehmung "nach außen", was sich auf die Drehachse als Zentrum, also von dieser senkrecht weg nach außen gehend, bezieht. Als "die Ausnehmung" wird vorliegend der Abschnitt einer Durchgangsöffnung in der Pressplatte bezeichnet, in welchem der Formschluss mit der Mutter besteht. Reicht die Mutter also beispielsweise nicht bis zu einer dem Elastomerkörper proximalen Stirnseite der Pressplatte, zählt der an die Mutter anschließende dem Elastomerkörper proximale Abschnitt der Durchgangsöffnung dann nicht mehr zur Ausnehmung; andererseits kann bei einer entsprechend großen Mutter auch die gesamte Durchgangsöffnung Ausnehmung sein.

Der die Ausnehmung nach außen überragende Flansch findet vorzugsweise an der Pressplatte selbst eine Anlagefläche, um die Kraft beim Spannen des Spannbolzens zu übertragen, und zwar an einer dem Elastomerkörper entgegengesetzten Seite der Pressplatte. Im Allgemeinen könnte zwischen Flansch und Pressplatte indes bspw. auch eine Unterlegscheibe vorgesehen sein und der Flansch deshalb nicht direkt an der Pressplatte anliegen, aber gleichwohl eine Kraft auf diese übertragen. Das entsprechende Gegenlager verhindert dann also, etwa sobald der Flansch an der Pressplatte anliegt, ein Verrutschen der Mutter entlang der Drehachse in Richtung zum Elastomerkörper hin, beispielsweise bereits beim Eindrehen des Spannbolzens und insbesondere beim Verspannen.

Ein weiterer Vorteil der erfindungsgemäßen Merkmalskombination kann insofern etwa auch darin bestehen, dass sich die Größe der Anlagefläche zwischen Flansch und Pressplatte im Prinzip frei wählen lässt, also beispielsweise auch eine entsprechend große Anlagefläche eingestellt werden kann. Dies kann hinsichtlich einer gleichmäßigen Kraftübertragung auf die Pressplatte und damit auch auf den Elastomerkörper Vorteile bieten; eine gleichmäßige Verpressung ist beispielsweise die Materialbeanspruchung und Dichtigkeit betreffend wünschenswert.

Würde alternativ eine Mutter ohne Flansch vorgesehen und in einer Durchgangsöffnung in der Pressplatte angeordnet, die sich im Anschluss an die (den Formschluss bildende) Ausnehmung verjüngt, würde die Mutter mit ihrer Stirnfläche eine Anlage an der Pressplatte finden (was das Vorsehen einer einfacher aufgebauten Mutter erlauben würde). Die sich entsprechend ergebende Anlagefläche wäre jedoch einerseits durch die Größe der Mutter vorbestimmt; andererseits wäre sie im Vergleich zum vorliegenden Ansatz auch näher an der Drehachse, also die Kraftübertragung konzentrierter und damit weniger gleichmäßig verteilt.

Die Pressplatte mit der eingesetzten Mutter liegt an einer Stirnseite des Elastomerkörpers (stirnseitig bezogen auf zur Drehachse parallele Richtungen) an, und vorzugsweise ist an der entgegengesetzten Stirnseite eine weitere Pressplatte vorgesehen. Der Elastomerkörper wird dann beim Verspannen also zwischen den beiden Pressplatten hinsichtlich der zu Drehachse parallelen Richtungen komprimiert, sodass er sich senkrecht dazu dichtend an die Leitungen beispielsweise eine Wandung in einem Wand- oder Bodenelement anlegt, also etwa an die Laibung einer Durchgangsöffnung oder ein Futterrohr.

Eine an einer Stirnseite des Elastomerkörpers angeordnete "Pressplatte" kann dabei beispielsweise auch mehrteilig vorgesehen sein, also aus mehreren Pressplattenteilen aufgebaut sein. Dies kann etwa bei einer Pressdichtung zur nachträglichen Montage auf der Leitung der Fall sein. Bei dem Elastomerkörper einer solchen Pressdichtung ist dann die Durchgangsöffnung für die Leitung über eine sich durch den Elastomerkörper erstreckende Trennfuge mit einer Außendichtfläche des Elastomerkörpers verbunden, sodass der Elastomerkörper aufgeklappt und auf die Leitung gesetzt bzw. diese eingelegt werden kann; die Trennfuge kann sich beispielsweise parallel zur Drehachse und senkrecht dazu durch den Elastomerkörper erstrecken. Die Pressplatte ist dann vorzugsweise der Trennfuge im Elastomerkörper derart entsprechend geteilt, dass die Pressdichtung im Gesamten, also der Elastomerkörper mit daran montierter Pressplatte aufgeklappt werden kann.

Die für die Leitung vorgesehene Durchgangsöffnung im Elastomerkörper kann beispielsweise auch mit einer Hülse bzw. mehreren ineinander geschachtelten Hülsen ausgestattet sein, sodass die Durchgangsöffnung durch Herausnahme einer Hülse an eine Leitung größeren Durchmessers angepasst werden kann. Vorzugsweise sind eine Mehrzahl Hülsen dabei über Materialbrücken miteinander bzw. dem übrigen Elastomerkörper verbunden, wobei sich eine Materialbrücke zum Herausnehmen der jeweiligen Hülse auftrennen lässt.

Die Hülsen können beispielsweise sämtlich am selben Elastomerkörper vorgesehen und über sich parallel zur Drehachse um diese umlaufend erstreckende Schnitte voneinander getrennt sein (von vorzugsweise stirnseitigen Materialbrücken abgesehen). Andererseits kann der Elastomerkörper auch mehrteilig sein, wobei ein erstes Elastomerkörperteil eine Mehrzahl Hülsen aufweist und auch ein zweites Elastomerkörperteil eine Mehrzahl Hülsen aufweist; das erste und das zweite Elastomerkörperteil sind dann derart zusammengesetzt, dass eine Hülse des ersten Elastomerkörperteils im Zwischenraum zwischen zwei Hülsen des zweiten Elastomerkörperteils angeordnet ist, und umgekehrt.

Bildlich gesprochen ist das erste Elastomerkörperteil dann in einer die Mittenachse der Leitung beinhaltenden Schnittebene kammartig aufgebaut, wobei die Kammzinken den Hülsen entsprechen und in den Zwischenräumen zwischen den Zinken die Hülsen des anderen Elastomerkörperteils (oder anderer Elastomerkörperteile) angeordnet werden. Die in den Zwischenräumen vorgesehenen Schalen können ebenfalls kammartig verbunden sein, sodass der Elastomerkörper in diesem Bild zwei mit den Zinken ineinander geschobenen Kämmen entspricht. Da zwischen den Hülsen eines Elastomerkörperteils also immer ein Zwischenraum vorgesehen ist, müssen die Schichten nicht durch aufwendige Schneidevorgänge erzeugt werden; ein entsprechendes Elastomerkörperteil mit hinreichend großen Zwischenräumen kann nämlich auch in einem formenden Verfahren erzeugt werden, etwa durch Spritzguss, Pressen oder Transferpressen.

Nun wieder zur Pressplatte: Die Ausnehmung wird senkrecht zur Drehachse nach außen hin von einer Einfassungsfläche der Pressplatte begrenzt; diese Einfassungsfläche hält den dem Elastomerkörper proximalen Abschnitt der Mutter formschlüssig. In bevorzugter Ausgestaltung geht die Einfassungsfläche direkt in eine dem Elastomerkörper distale Stirnseitenfläche der Pressplatte über und liegt der Flansch an dieser distalen Stirnseitenfläche an. In anderen Worten ist keine Vertiefung in der dem Elastomerkörper entgegengesetzte (dazu distale) Stirnseite der Pressplatte vorgesehen, in welcher der Flansch sitzt; im Allgemeinen könnte nämlich auch eine solche Vertiefung vorgesehen, etwa eingefräst sein. Bevorzugt ist hingegen eben ein "direkter" Übergang, findet sich zwischen Einfassungsfläche und (distaler) Stirnseitenfläche also allenfalls ein Abschnitt konvexer Krümmung, vorzugsweise grenzen die beiden Flächen in einer um die Drehachse umlaufenden Kante aneinander. Es ist dann also vorzugsweise auch keine Anfasung vorgesehen, was etwa auch hinsichtlich einer möglichst großflächigen Anlage zwischen Flansch und Pressplatte von Vorteil sein kann.

Erfindungsgemäß ist die distale Stirnseitenfläche in ihrem Flächenbereich plan, ist die Pressplatte also vergleichsweise einfach aufgebaut, was beispielsweise die Handhabung bei der Montage erleichtern kann. Erfindungsgemäß ist ferner nicht nur die distale Stirnseitenfläche plan, sondern ist die Pressplatte insgesamt in ihrem Flächenbereich als plane Platte ausgebildet. "In ihrem Flächenbereich" meint von gegebenenfalls die Fläche einfassenden Außenkanten abgesehen, die beispielsweise im Falle eines dünnen Blechs zur mechanischen Verstärkung umgebogen sein können. Die Flächenrichtungen liegen vorzugsweise senkrecht zur Drehachse.

Besonders bevorzugt ist die distale Stirnseitenfläche jedoch im Gesamten plan (also bis zu den Außenkanten) und liegt weiter bevorzugt senkrecht zur Drehachse. Weiterhin bevorzugt ist die Pressplatte insgesamt (bis zu den Außenkanten) eine plane Platte, gibt es also keine umgebogenen Kanten.

Als Material ist für die Pressplatte ein Metall bevorzugt, beispielsweise galvanisch verzinkte Stähle, niedrig- oder hochlegierte Edelstähle. Im Vergleich zu einem Kunststoff kann ein Metall etwa hinsichtlich der Steifigkeit Vorteile bieten, was insbesondere den bevorzugt planen Aufbau betreffend von Interesse sein kann.

Vorzugsweise ist bzw. wird die Pressplatte aus einem Metallblech herausgearbeitet, etwa durch Stanzen, Schneiden, insbesondere Laserschneiden, oder Fräsen. Wenngleich im Allgemeinen auch ein Feinblech mit einer in Richtung der Drehachse genommenen Dicke von weniger als 3 mm vorgesehen sein kann, das dann beispielsweise durch ein Hochbiegen der Kanten versteift wird, ist eine Dicke von mindestens 3 mm bevorzugt, wobei mindestens 4 mm weiter und mindestens 5 mm besonders bevorzugt sind. Mögliche Obergrenzen können (von den Untergrenzen unabhängig) beispielsweise bei höchstens 2 cm, 1,5 cm bzw. 1 cm liegen; eine Obergrenze kann etwa hinsichtlich des Materialverbrauchs und auch dessen Verarbeitbarkeit vorteilhaft sein.

In bevorzugter Ausgestaltung erstreckt sich die Einfassungsfläche, welche die Ausnehmung seitlich begrenzt, ausschließlich parallel zur Drehachse und versatzfrei, verläuft sie also beispielsweise nicht abschnittsweise konisch. Vorzugsweise hat die Einfassungsfläche in Richtung der Drehachse gesehen ein Mehrkantprofil mit weiter bevorzugt gleich langen Kanten, beispielsweise ein Vierkant-, Sechskant- oder Achtkantprofil. Der dem Elastomerkörper proximale Abschnitt der Mutter hat bevorzugt ein dazu komplementäres Profil.

Vorzugsweise ist die gesamte Durchgangsöffnung in der Pressplatte von einer sich ausschließlich parallel zur Drehachse versatzfrei erstreckenden Einfassungsfläche begrenzt. Es kann sich also der dem Elastomerkörper proximale Abschnitt der Mutter durch die gesamte Pressplatte erstrecken, diese also vollständig durchsetzen. Andererseits ist auch im Falle einer die Pressplatte nicht vollständig durchsetzenden Mutter, wenn also nicht die gesamte Durchgangsöffnung in der Pressplatte gleich der Ausnehmung ist, diese Durchgangsöffnung vorzugsweise von einer sich ausschließlich parallel zur Drehachse versatzfrei durch die Pressplatte erstreckenden Durchgangsöffnungs-Einfassungsfläche begrenzt.

"Versatzfrei" meint wie vorstehend, dass die Erstreckung frei von Durchmesser- bzw. in allgemeineren Worten Abstandssprüngen senkrecht zur Drehachse ist. Eine entsprechende Durchgangsöffnung kann sich vorteilhafterweise vereinfacht in die Pressplatte einbringen lassen, etwa im Vergleich zum Einfräsen einer Durchgangsöffnung mit Abstands-/Durchmessersprung. Das erfindungsgemäße Vorsehen der Mutter mit Flansch ermöglicht vorteilhafterweise eine solche einfache Ausgestaltung der Durchgangsöffnung, weil der Flansch vorzugsweise an einer Stirnseitenfläche anliegt.

In bevorzugter Ausgestaltung ist der Flansch hinsichtlich eines Umlaufs um die Drehachse vollständig umlaufend vorgesehen, überragt er die Ausnehmung also bezogen auf sämtliche Richtungen senkrecht zur Drehachse von dieser weg nach außen. Dies kann etwa hinsichtlich einer Maximierung der Anlagefläche zwischen Flansch und Pressplatte bzw. auch eine möglichst gleichmäßige Übertragung des Anpressdrucks betreffend von Interesse sein.

Wie bereits eingangs erwähnt, lässt sich mit der erfindungsgemäßen Merkmalskombination vorteilhafterweise die Anlagefläche zwischen Mutter und Pressplatte weitgehend unabhängig von der Größe der Mutter im Formschluss-Abschnitt wählen. Vorzugsweise beträgt ein Anlageflächen-Flächeninhalt (der Anlagefläche zwischen Flansch und Pressplatte) mindestens das 1,1-fache, weiter bevorzugt mindestens das 1,2-fache, besonders bevorzugt mindestens das 1,3-fache, eines Stirnseiten-Flächeninhalts, den die dem Elastomerkörper proximale (dem Flansch entgegengesetzte) Stirnseite der Mutter hat. Mögliche Obergrenzen können beispielsweise bei höchstens dem 3-, 2,5- bzw. 2-fachen liegen. In diesem Zusammenhang wird als "proximale Stirnseite" der Mutter betrachtet, was an einer zur Drehachse senkrechten Fläche eine Anlage finden würde.

In bevorzugter Ausgestaltung weist der Spannbolzen an seinem dem in die Mutter eingedrehten Ende entgegengesetzten Ende einen Schraubenkopf mit einem Schraubenkopfantrieb auf, vorzugsweise mit einem Innen-Schraubenkopfantrieb, etwa einem Innen-Sechskant oder Torxprofil. Der Spannbolzen kann dann also über den Schraubenkopfantrieb gedreht werden, etwa bereits beim Eindrehen in die Mutter im Zuge der Herstellung und/oder zum Anpressen der Pressplatte auf den Elastomerkörper. Im Allgemeinen könnte beispielsweise auch ein Gewindestift in die Mutter mit Flansch eingedreht und auf dessen der Mutter mit Flansch entgegengesetztes Ende eine Spannmutter gesetzt werden. Bevorzugt ist indes ein Spannbolzen mit Schraubenkopf.

Hinsichtlich der Mutter mit Flansch ist generell bevorzugt, dass sich ein Loch, in welches der Gewindeabschnitt des Spannbolzens eingedreht ist, als die Mutter vollständig durchsetzendes Durchgangsloch erstreckt. Weiter bevorzugt ist dann auch das gesamte Durchgangsloch mit einem Innengewinde versehen, beschränkt die Mutter also nicht das Eindrehen des Spannbolzens und damit das Verspannen der Pressdichtung.

Zusätzlich zu dem eben genannten Schraubenkopf und dem Gewindeabschnitt am entgegengesetzten (in die Mutter eingedrehten) Ende weist ein bevorzugter Spannbolzen ferner einen gewindefreien Abschnitt dazwischen auf, an welchen sich der Elastomerkörper im verspannten Zustand dichtend anlegt. Der gewindefreie Abschnitt kann sich bspw. über mindestens 10 %, 20 % bzw. 30 % und (davon unabhängig) über höchstens 80 %, 70 %, 60 % bzw. 50 % der entlang der Drehachse genommenen Spannbolzen-Länge erstrecken (die Werte sind in der Reihenfolge ihrer Nennung jeweils zunehmend bevorzugt).

Wie bereits eingangs erwähnt, betrifft die Erfindung auch ein Herstellungsverfahren. Dabei wird der Spannbolzen eingebracht, wenn die Mutter in die Ausnehmung gesetzt ist und sich Elastomerkörper und Pressplatte in Anlage aneinander befinden. Vorzugsweise wird zum Zusammensetzen eine Aufnahmevorrichtung vorgesehen, in welcher die Mutter mit dem dann formschlüssig gehaltenen, proximalen Abschnitt nach oben weisend liegt; vorzugsweise wird die Mutter entsprechend in die Aufnahmevorrichtung eingelegt. Im Weiteren wird die Pressplatte derart auf die Aufnahmevorrichtung aufgelegt, dass die Mutter formschlüssig in der Ausnehmung sitzt. Anschließend wird der Elastomerkörper auf die Pressplatte mit der nun bereits formschlüssig darin gehaltenen Mutter aufgelegt, und es wird dann der Spannbolzen eingedreht, vorzugsweise nach dem Auflegen einer weiteren Pressplatte auf den Elastomerkörper. Vereinfacht gesprochen können die Einzelteile beim Zusammensetzen einer erfindungsgemäßen Pressdichtung vorteilhafterweise aufeinander "gestapelt", also Schritt für Schritt aufeinandergelegt werden, ohne dass die Pressdichtung (bzw. der jeweilig bereits zusammengesetzte Teil davon) dazwischen umorientiert werden muss. "Auflegen" meint der Richtung der Schwerkraft folgend "ablegen auf".

Da der Flansch der Mutter vorzugsweise außerhalb der Durchgangsöffnung (mit der Ausnehmung) in der Pressplatte an der distalen Stirnseitenfläche anliegt, kann das Durchgangsloch vorteilhafterweise entsprechend einfach mit sich ausschließlich parallel und versatzfrei zur Drehachse erstreckender Durchgangsloch-Einfassungsfläche vorgesehen werden. Bevorzugt wird das Durchgangsloch bzw. die Ausnehmung mittels Laserschneiden eingebracht, was im Vergleich zu einem Fräsen etwa den Durchsatz bzw. die Kosten betreffend Vorteile bieten, also insbesondere in einer Massenfertigung von Interesse sein kann.

Die Erfindung betrifft auch die Verwendung einer entsprechenden Pressdichtung zum Abdichten einer Strom-, Gas-, Wasser-, Wärme-, Telekommunikations-, Signal- oder Datenleitung, die ein Wand- oder Bodenelement durchsetzt, vorzugsweise eine Gebäudewand oder einen Gebäudeboden. Die Pressdichtung kann beispielsweise in eine Kernbohrung gesetzt direkt an dem Wand- oder Bodenelement anliegen oder auch in ein einbetoniertes Futterrohr eingesetzt werden.

Im Folgenden wird die Erfindung anhand eines Ausführungsbeispiels näher erläutert, wobei auch weiterhin nicht im Einzelnen zwischen den verschiedenen Anspruchskategorien unterschieden wird und die Merkmale im Rahmen der unabhängigen Ansprüche auch in anderer Kombination erfindungswesentlich sein können.

Im Einzelnen zeigt
- Fig. 1: eine erfindungsgemäße Pressdichtung in einer geschnittenen Seitenansicht;
- Fig. 2: eine Detailansicht zu der Pressdichtung gemäß Fig. 1;
- Fig. 3: die Pressdichtung gemäß Fig. 1 in einer Aufsicht.

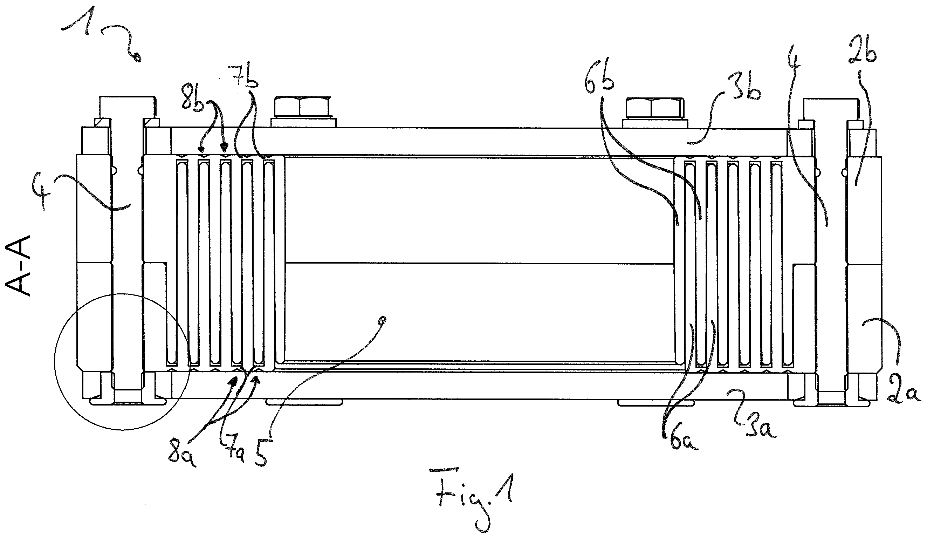

Fig. 1 zeigt die erfindungsgemäße Pressdichtung 1 in einer geschnittenen Seitenansicht. Zu erkennen ist der Elastomerkörper 2, der von zwei Pressplatten 3 eingefasst wird. Die beiden Pressplatten 3 sind über Spannbolzen 4 derart miteinander wirkverbunden, dass sie durch Anziehen der Spannbolzen 4 aufeinander zubewegt werden können, sodass der Elastomerkörper 2 dazwischen komprimiert wird und sich infolgedessen dichtend an die Laibung einer Durchgangsöffnung und eine hindurchgeführte Leitung anlegt (nicht dargestellt).

Der Elastomerkörper 2 ist vorliegend aus zwei Elastomerkörperteilen 2a,b zusammengesetzt, wovon jedes eine Mehrzahl jeweils um die Durchgangsöffnung 5 für die Leitung umlaufende Schalen 6a,b zur Verfügung stellt. So kann jedes Elastomerkörperteil 2a,b für sich in einem formenden Verfahren, etwa durch Pressen in eine Form oder Spritzguss, hergestellt werden, weil die Zwischenräume zwischen den Schalen 6a,b des jeweiligen Elastomerkörperteils 2a,b hinreichend groß sind. In dem resultierenden Zwischenraum zwischen den Schalen 6a des einen Elastomerkörperteils 2a sind beim zusammengesetzten Elastomerkörper 2 dann die Schalen 6b des anderen Elastomerkörperteils 2b angeordnet, und umgekehrt.

Die Schalen 6a,b können zur Anpassung der Durchgangsöffnung 5 an Leitungen unterschiedlichen Außendurchmessers herausgenommen werden. Dazu wird eine am axialen Ende der jeweiligen Schale 6a,b vorgesehene jeweilige Materialbrücke 7a,b aufgetrennt. Die Materialbrücken 7a,b sind stirnseitig über umlaufende Kerben 8a,b gekennzeichnet, wodurch zugleich die Materialstärke reduziert und das Austrennen erleichtert ist.

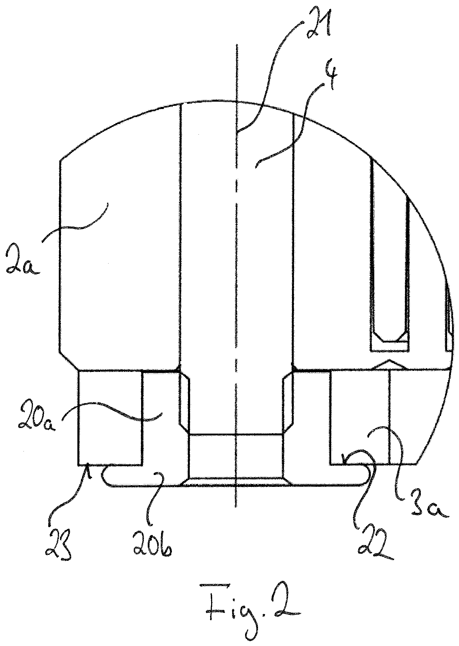

Fig. 2 zeigt in einer Detailansicht den erfindungsgemäß gegenüber der Pressplatte 3a gelagerten Spannbolzen 4. Der Spannbolzen 4 ist mit seinem Gewindeabschnitt in eine Mutter 20 eingedreht. Diese Mutter 20 sitzt mit einem dem Elastomerkörper 2 proximalen Abschnitt 20a formschlüssig in einer Ausnehmung in der Pressplatte 3a. Ein dem Elastomerkörper 2 distaler Abschnitt 20b der Mutter 20 weist einen Flansch auf. Dieser überragt die Ausnehmung nach außen, und zwar bezogen auf Richtungen senkrecht von einer Drehachse 21 weg, um welche der Spannbolzen 4 in die Mutter 20 eingedreht ist.

Der Flansch liegt mit einer Anlagefläche 22 an der dem Elastomerkörper 2 distalen Stirnseite 23 der Pressplatte 3a an. Wird der Spannbolzen 4 zum Spannen des Elastomerkörpers 2 weiter in die Mutter 20 eingedreht, ist die Mutter 20 einerseits verdrehsicher in der Ausnehmung der Pressplatte 3a gehalten; andererseits bildet der dem Elastomerkörper 2 distale Abschnitt 20b mit dem Flansch ein Gegenlager, wird also die Pressplatte 3a auf den Elastomerkörper 2 angepresst. Der Elastomerkörper 2 wird in Richtung der Drehachse 4 komprimiert und expandiert senkrecht dazu, um sich an Leitung und Laibung anzulegen.

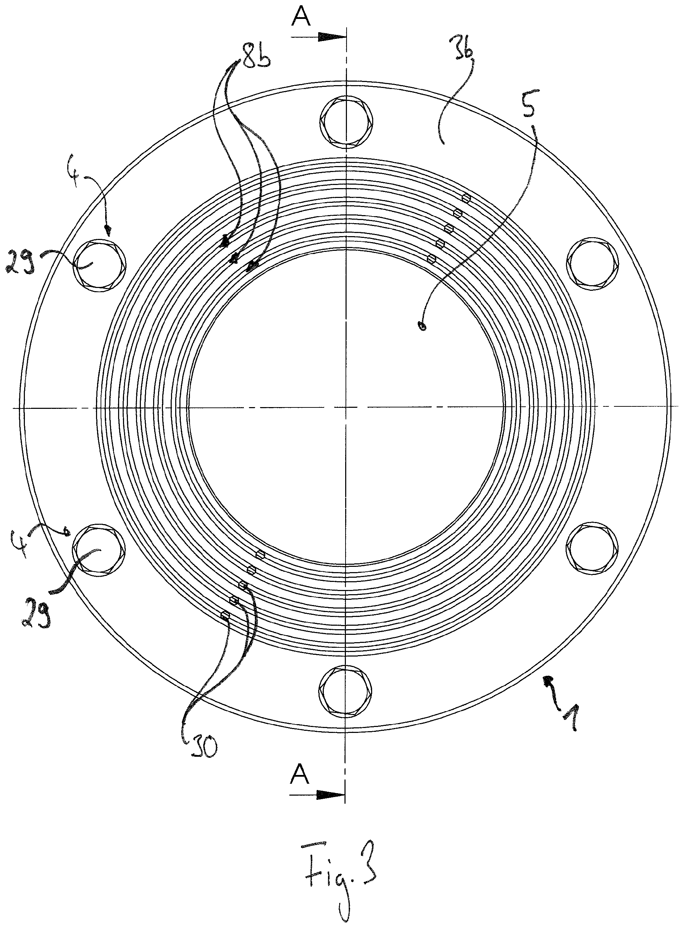

Fig. 3 zeigt die erfindungsgemäße Pressdichtung 1 in einer Aufsicht, und zwar auf die Pressplatte 3b blickend. An dieser stützen sich die jeweiligen Spannbolzen 4 jeweils über einen Schraubenkopf 29 mit Außensechskant ab, und zwar über eine jeweilige Unterlegscheibe gelagert. Die Durchgangsöffnung 5 wird wie vorstehend beschrieben von einer Folge Schalen 6a,b zur Durchmesseranpassung umfasst, wobei in der Aufsicht die umlaufenden Kerben 8b zu erkennen sind. Ferner sind in dieser Aufsicht Entlüftungslöcher 30 dargestellt, über welche beim Zusammensetzen der beiden Elastomerkörperteile 2a,b die sich in den jeweiligen Zwischenräumen zwischen den Schalen 6a,b befindliche Luft entweichen kann.

## Patentansprüche

1. Pressdichtung (1) zum Aufbauen eines dichtenden Verschlusses einer von einer Leitung durchsetzten Durchgangsöffnung, mit
einem Elastomerkörper (2) zur dichtenden Anlage an der Leitung,
einer Pressplatte (3a) und
einem den Elastomerkörper (2) durchsetzenden Spannbolzen (4),
welche Pressplatte (3a) mittels des Spannbolzens (4) solchermaßen auf den Elastomerkörper (2) anpressbar ist, dass sich der Elastomerkörper (2) dichtend an die Leitung anlegt,
wobei ein Gewindeabschnitt des Spannbolzens (4) um eine Drehachse (21) in eine Mutter (20) eingedreht ist, von welcher ein dem Elastomerkörper (2) proximaler Abschnitt (20a) formschlüssig und damit hinsichtlich einer Drehbewegung um die Drehachse (21) verdrehsicher in einer Ausnehmung in der Pressplatte (3a) sitzt und ein dem Elastomerkörper (2) distaler Abschnitt (20b) einen Flansch aufweist, der die Ausnehmung bezogen auf Richtungen senkrecht zur Drehachse (21) nach außen überragt, um beim Spannen des Spannbolzens (4) eine Kraft auf die Pressplatte (3a) zu übertragen und diese auf den Elastomerkörper (2) anzupressen,
wobei eine dem Elastomerkörper (2) distale Stirnseitenfläche (23) der Pressplatte (3a) in ihrem Flächenbereich, also von gegebenenfalls den Kanten abgesehen, plan ist und die Pressplatte (3a) in ihrem Flächenbereich, also von gegebenenfalls den Kanten abgesehen, als plane Platte ausgebildet ist.

2. Pressdichtung (1) nach Anspruch 1, bei welcher eine die Ausnehmung senkrecht zur Drehachse (21) nach außen hin begrenzende Einfassungsfläche der Pressplatte (3a) direkt in eine dem Elastomerkörper (2) distale Stirnseitenfläche (23) der Pressplatte (3a) übergeht und der Flansch an der distalen Stirnseitenfläche (23) anliegt.

3. Pressdichtung (1) nach Anspruch 1 oder 2, bei welcher die Pressplatte (3a) aus einem Metall vorgesehen ist.

4. Pressdichtung (1) nach Anspruch 3, bei welcher die Pressplatte (3a) aus einem Blech herausgearbeitet ist.

5. Pressdichtung (1) nach einem der vorstehenden Ansprüche, bei welcher sich eine die Ausnehmung senkrecht zur Drehachse (21) nach außen hin begrenzende Einfassungsfläche der Pressplatte (3a) ausschließlich parallel zur Drehachse (21) und versatzfrei erstreckt.

6. Pressdichtung (1) nach Anspruch 5, bei welcher die Ausnehmung ein Abschnitt einer Durchgangsöffnung in der Pressplatte (3a) ist und sich eine die Durchgangsöffnung senkrecht zur Drehachse (21) nach außen hin begrenzende Durchgangsöffnungs-Einfassungsfläche ausschließlich parallel zur Drehachse (21) und versatzfrei erstreckt.

7. Pressdichtung (1) nach einem der vorstehenden Ansprüche, bei welcher der Flansch hinsichtlich eines Umlaufs um die Drehachse (21) vollständig umlaufend vorgesehen ist und die Ausnehmung bezogen auf sämtliche Richtungen senkrecht zur Drehachse (21) nach außen überragt.

8. Pressdichtung (1) nach einem der vorstehenden Ansprüche, bei welcher der Flansch mit einer Anlagefläche (22) an der Pressplatte (3a) anliegt und diese Anlagefläche (22) einen Anlageflächen-Flächeninhalt hat, der mindestens dem 1,1-fachen eines Stirnseiten-Flächeninhalts entspricht, welchen eine dem Elastomerkörper (2) proximale Stirnseite der Mutter (20) hat.

9. Pressdichtung (1) nach einem der vorstehenden Ansprüche, bei welcher der Spannbolzen (4) an seinem der Mutter (20) entgegengesetzten Ende einen Schraubenkopf (29) mit einem Schraubenkopfantrieb aufweist.

10. Verfahren zum Herstellen einer Pressdichtung (1) nach einem der vorstehenden Ansprüche, umfassend die Schritte:
- Vorsehen der Pressplatte (3a) mit der Ausnehmung;
- Einsetzen der Mutter (20) in die Ausnehmung;
- Anordnen von Elastomerkörper (2) und Pressplatte (3a) in Anlage aneinander;
- und anschließend an diese Schritte, Einbringen des Spannbolzens (4), sodass dieser den Elastomerkörper (2) durchsetzt, und Eindrehen des Spannbolzens (4) in die Mutter (20).

11. Verfahren nach Anspruch 10, bei welchem die Mutter (20) mit dem Flansch nach unten in einer Aufnahmevorrichtung vorgesehen wird, dann die Pressplatte (3a) derart auf die Aufnahmevorrichtung aufgelegt wird, dass die Mutter (20) mit ihrem proximalen Abschnitt (20a) formschlüssig in der Ausnehmung sitzt, und anschließend der Elastomerkörper (2) auf die Pressplatte (3a) aufgelegt wird.

12. Verfahren nach Anspruch 10 oder 11, bei welchem die Ausnehmung mittels Laserschneiden in die Pressplatte (3a) eingebracht wird.

13. Verwendung einer Pressdichtung (1) nach einem der Ansprüche 1 bis 9 zum Abdichten einer Strom-, Gas-, Wasser-, Wärme-, Telekommunikations-, Signal- oder Datenleitung in einer Durchgangsöffnung in einem Wandoder Bodenelement, vorzugsweise eines Gebäudes.

## Claims

1. Press seal (1) for building up a sealing closure of a through-opening intersected by a line, having
an elastomer body (2) for contacting said line sealingly,
a press plate (3a) and
a tensioning bolt (4) intersecting said elastomer body (2),
wherein said press plate (3a) can be pressed by said tensioning bolt (4) onto said elastomer body (2) in such a way, that said elastomer body (2) contacts said line sealingly,
wherein a threaded portion of said tensioning bolt (4) is screwed into a nut (20) around a rotational axis (21), a section (20a) of said nut (20), which section (20a) lies proximal to said elastomer body (2), being held by a form-fit in a recess in said press plate (3a) and being secured against a rotational movement around said rotational axis (21) thus, a section (20b) of said nut (20), which section (20b) lies distal to said elastomer body (2), comprising a flange which protrudes beyond said recess in directions perpendicular to said rotational axis (21) outwards for transferring a force onto said press plate (3a) and pressing said press plate (3a) onto said elastomer body (2) when said tensioning bolt (4) is tensioned,
wherein a front face (23) of said press plate (3a), which lies distal to said elastomer body (2), is even in its area region, namely apart from the edges, if appropriate, and said press plate (3a) is an even plate in its area region, namely apart from the edges, if appropriate.

2. Press seal (1) according to claim 1, wherein a surrounding surface of said press plate (3a), which defines said recess perpendicularly to said rotational axis (21) outwards, verges directly into a front face (23) of said press plate (3a), which lies distal to said elastomer body (2), said flange contacting said distal front face (23).

3. Press seal (1) according to one of the preceding claims, wherein said press plate (3a) is made of metal.

4. Press seal (1) according to claim 3, wherein said press plate (3a) is worked from a sheet metal.

5. Press seal (1) according to one of the preceding claims, wherein a surrounding surface of said press plate (3a), which defines said recess perpendicularly to said rotational axis (21) outwards, extends solely in parallel to said rotational axis (21) and free of a step.

6. Press seal (1) according to claim 5, wherein said recess is a portion of a through hole in said press plate (3a) and wherein a through-hole-surrounding-surface, which defines said through hole perpendicularly to said rotational axis (21) outwards, extends solely in parallel to said rotational axis (21) and free of a step.

7. Press seal (1) according to one of the preceding claims, wherein said flange is, with respect to a circumference around said rotational axis (21), provided over the whole circumference and projects beyond said recess in all directions perpendicular to said rotational axis (21) outwards.

8. Press seal (1) according to one of the preceding claims, wherein said flange contacts said press plate (3a) with a contact area (22), said contact area (22) having an area which is at least the 1,1-fold of an area of a front face of said nut (20), said front face of said nut (20) lying proximal to said elastomer body (2).

9. Press seal (1) according to one of the preceding claims, wherein said tensioning bolt (4) comprises a bolt head (29) with a bolt head drive at its end opposite to said nut (20).

10. A method for manufacturing a press seal (1) according to one of the preceding claims, comprising the steps:
- providing said press plate (3a) having said recess;
- inserting said nut (20) into said recess;
- arranging said elastomer body (2) and said press plate (3a) in contact with each other;
- and, subsequent to those steps, inserting said tensioning bolt (4) so that said tensioning bolt (4) intersects said elastomer body (2), and screwing said tensioning bolt (4) into said nut (20).

11. The method according to claim 10, wherein said nut (20) is arranged in a receiving apparatus such that said flange points downwards, said press plate (3a) being laid on said receiving apparatus in such a way that said proximal section (20a) of said nut (20) is held then by a form-fit in said recess, said elastomer body (2) being laid on said press plate (3a) subsequently.

12. The method according to claim 10 or 11, wherein said recess is cut into said press plate (3a) by laser cutting.

13. Use of a press seal (1) according to one of the claims 1-9 for sealing an electric, gas, water, heat, telecommunication, signal or data line in a through-opening in a wall or floor element, preferably of a building.

## Revendications

1. Joint de compression (1) destiné à l'obturation étanche d'une ouverture de passage par laquelle passe une conduite, comportant:
un corps élastomère (2) destiné à être appliqué de manière étanche contre la conduite,
une plaque de compression (3a), et
un boulon de serrage (4) traversant le corps élastomère (2);
ladite plaque de compression (3a) pouvant être compressée contre le corps élastomère (2) au moyen du boulon de serrage (4) de manière que le corps élastomère (2) soit appliqué de manière étanche contre la conduite,
une section filetée du boulon de serrage (4) étant vissée sur un axe de rotation (21) dans un écrou (20) dont une section (20a) proximale au corps élastomère (2) loge par complémentarité de formes, en étant ainsi bloquée contre toute rotation sur ledit axe de rotation (21), dans un évidement de la plaque de compression (3a), et dont une section (20b) distale au corps élastomère (2) présente une bride qui ressort de l'évidement, dans les sens orientés perpendiculairement à l'axe de rotation (21), laquelle, lors du serrage du boulon de serrage (4), permet d'exercer une force sur la plaque de compression (3a) afin de compresser cette dernière sur le corps élastomère (2),
et une surface frontale (23) de la plaque de compression (3a) qui est distale du corps élastomère (2) étant plane dans sa zone de surface, c'est-à-dire selon le cas vu sur les bords, et la plaque de compression (3a) étant conçue sous la forme d'une plaque plane dans sa zone de surface, c'est-à-dire selon le cas vu sur les bords.

2. Joint de compression (1) selon la revendication 1, dans lequel une surface frontale (23) de la plaque de compression (3a), qui est distale au corps élastomère (2), est directement dans la continuité d'une surface de bordure de la plaque de compression (3a) délimitant l'évidement perpendiculairement à l'axe de rotation (21) vers l'extérieur et dans lequel la bride est appliquée contre la surface frontale (23) distale.

3. Joint de compression (1) selon la revendication 1 ou 2, dans lequel la plaque de compression (3a) est conçue en métal.

4. Joint de compression (1) selon la revendication 3, dans lequel la plaque de compression (3a) est élaborée à partir d'une tôle.

5. Joint de compression (1) selon l'une des revendications précédentes, dans lequel une surface de bordure de la plaque de compression (3a) délimitant l'évidement perpendiculairement à l'axe de rotation (21) vers l'extérieur s'étend de manière exclusivement parallèle à l'axe de rotation (21) sans déport.

6. Joint de compression (1) selon la revendication 5, dans lequel l'évidement constitue une section d'une ouverture de passage pratiquée dans la plaque de compression (3a) et dans lequel une surface de bordure d'ouverture de passage délimitant l'ouverture de passage perpendiculairement à l'axe de rotation (21) vers l'extérieur s'étend de manière exclusivement parallèle à l'axe de rotation (21) sans déport.

7. Joint de compression (1) selon l'une des revendications précédentes, dans lequel, la bride est conçue en étant ininterrompue en encerclant totalement l'axe de rotation (21) et ressort vers l'extérieur par rapport à l'évidement, perpendiculairement à l'axe de rotation (21), en tout point.

8. Joint de compression (1) selon l'une des revendications précédentes, dans lequel la bride est appliquée contre la plaque de compression (3a) par une surface de butée (22), laquelle surface de butée (22) présente une superficie de butée correspondant au moins à 1,1 fois une superficie de butée que présente une face frontale de l'écrou (20) proximale au corps élastomère (2).

9. Joint de compression (1) selon l'une des revendications précédentes, dans lequel le boulon de serrage (4) présente, sur son extrémité opposée à l'écrou (20), une tête de vissage (29) pourvue d'une empreinte.

10. Procédé de production d'un joint de compression (1) selon l'une des revendications précédentes, comprenant les étapes consistant à:
- munir la plaque de compression (3a) d'un évidement,
- introduire l'écrou (20) dans l'évidement,
- appliquer le corps élastomère (2) et la plaque de compression (3a) l'un contre l'autre,
- et, suite à ces étapes, poser le boulon de serrage (4) de manière que celui-ci traverse le corps élastomère (2), et serrer le boulon de serrage (4) dans l'écrou (20).

11. Procédé selon la revendication 10, dans lequel l'écrou (20) est prévu dans un dispositif de retenue, la bride vers le bas, puis la plaque de compression (3a) est posée sur le dispositif de retenue de manière que l'écrou (20) loge par complémentarité de formes dans ledit évidement par sa section proximale (20a), après quoi le corps élastomère (2) est posé sur la plaque de compression (3a).

12. Procédé selon la revendication 10 ou 11, dans lequel l'évidement est pratiqué dans la plaque de compression (3a) par découpe au laser.

13. Utilisation d'un joint de compression (1) selon l'une des revendications 1 à 9 pour étancher le passage d'une conduite d'électricité, de gaz, d'eau, de chaleur, de télécommunications, de signaux ou de données dans une ouverture de passage pratiquée dans un élément de mur ou de sol, de préférence constitutif d'un bâtiment.
